Europäisches Patentamt

European Patent Office

Office européen des brevets

(19)

(11) **EP 1 207 048 A1**

(12) **EUROPEAN PATENT APPLICATION**

(43) Date of publication:
**22.05.2002 Bulletin 2002/21**

(51) Int Cl.⁷: **B41M 5/36**, B41C 1/10,
B41M 5/26, G05D 23/19

(21) Application number: **00124205.6**

(22) Date of filing: **08.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Schäffer, Erik**<br>  **9784 PD Noordwolde (NL)**<br>• **Steiner, Ullrich Prof. Dr.**<br>  **9711 ED Groningen (NL)** |
| (71) Applicant: **Applied NanoSystems B.V.**<br>**9711 BC Groningen (NL)** | (74) Representative: **Müller-Boré & Partner**<br>**Patentanwälte**<br>**Grafinger Strasse 2**<br>**81671 München (DE)** |

(54) **A process and an apparatus for the formation of patterns in films using temperature gradients**

(57)    The present invention relates to a process and an apparatus for producing patterns, particularly high-resolution patterns, in films which are exposed to temperature gradients. In particular, there is provided a process for producing lithographic structures by exposing at least one film on a substrate to a temperature gradient, the temperature gradient generating forces in the film which cause a mass transfer in the film to thereby produce a lithographic pattern.

## Fig. 1

EP 1 207 048 A1

**Description**

The present invention relates to a process and an apparatus for producing patterns, particularly high-resolution patterns, in films which are exposed to temperature gradients. In particular, there is provided a process for producing lithographic structures by exposing at least one film on a substrate to a temperature gradient, the temperature gradient generating forces in the film which cause a mass transfer in the film to thereby produce a lithographic pattern.

In microelectronics, biotechnology and microsystems industries, it is important to produce high resolution patterns in substrates. For example, high resolution patterns are necessary to produce integrated circuits. Presently, photolithography is used to produce patterns on substrates. Photolithography techniques involve exposing a photoresist to an optical pattern and using chemicals to etch either the exposed or unexposed portions of the photoresist to produce the pattern on the substrate. The resolution of the pattern is thus limited by the wavelength of light used to produce the optical pattern. Since smaller wavelengths have to be used to produce sub-micron patterns, photolithography becomes increasingly complex and costly.

Accordingly, it is an object of the present invention to provide a process being capable of producing patterns, particularly high-resolution patterns, without the application of optical radiation to thereby avoid the above limitation by the wavelength of light used to produce such patterns. Further, such a process should not require the use of chemicals to etch or remove portions of the film. Moreover, it is a further object of the present invention to provide an apparatus for carrying out such a process.

This object is solved by the embodiments characterized in the claims. In particular, there is provided a process for producing a patterned film comprising the steps of

(a) providing a substrate having a substrate surface for supporting the film to be patterned,
(b) depositing at least one film containing a thermally conducting material onto the substrate surface, and
(c) exposing said at least one film to a temperature gradient, thereby generating forces in the film which cause a mass transfer in the film to thereby produce a pattern in the film.

The process according to the present invention includes several advantages. For example patterns are produced without optical radiation. In principle, the lateral resolution of the pattern can be made arbitrarily small by controlling the applied temperature gradient and selecting a film with appropriate properties. Furthermore, high-resolution patterns, e.g. lithographic structures, can be obtained by the process according to the present invention without requiring the use of chemicals to etch or remove portions of the film.

The temperature gradient to which the at least one film is exposed, is preferably within the range of $10^6$ °C/m to $10^{10}$ °C/m, more preferably $10^7$ °C/m to $10^9$ °C/m. The film can be present in a liquid or a solid state. The deposition of the at least one film in step (b) can be carried out by the conventionally known techniques like spin coating, spraying, immersing, etc.. Preferably, the film is liquid after its deposition onto the substrate surface. If the film is not liquid after its deposition onto the substrate surface, the film can be liquefied before and/or during exposition to a temperature gradient in step (c) of the process according to the present invention. The liquefaction can be performed by e.g. heating or treating with a solvent or in a solvent atmosphere. After step (c) according to the process of the present invention, the film can then be solidified, for example, by cooling, a chemical reaction, a cross-linking process, a polymerization reaction, or by using a sol-gel process. The film to be patterned can be of a single layer or can include a plurality of layers, i.e. two or more iterations. The thermally conducting material which is contained in the at least one film to be patterned, is preferably an organic polymer or an organic oligomer. The molecular weight of the organic polymer or organic oligomer used is not subject to any particular limitation. For example, polymers having a molecular weight of approximately 100 g/mol can be used. As preferred examples of the organic polymer usable in course of the process according to the present invention, polystyrene, partially or fully chlorinated or brominated polystyrene, polyacrylates and polymethacrylates can be exemplified.

When the film contains an organic polymer, it is particularly preferred to keep the film during the operation of step (c) of the process according to the present invention above the glass transition temperature of the organic polymer used.

The substrate can include a single layer or a plurality of layers. The substrate surface can be a surface of a solid or liquid material. Preferably, the substrate can be a semiconductor wafer, more preferably a silicon wafer. Such a semiconductor wafer can also be coated with a precious metal layer like e.g. a gold layer in order to increase the acoustic impedance difference at the film-substrate interface.

Preferably, the film thickness is within the range of 10 nm to 1000 nm, more preferably 50 nm to 250 nm.

In a preferred embodiment, the temperature gradient is generated by bringing the substrate surface and a mounting surface provided opposite to the substrate surface into thermal contact with first and second temperature control means set at different temperatures. The spacing between the substrate surface and the mounting surface is preferably within the range of 10 nm to 5000 nm, more preferably 50 nm to 1000 nm, even more preferably 150 nm to 600 nm.

The pattern obtained by the process according to the present invention can be further specified by spatially controlling the temperature gradient. The pattern can be even further specified by spatially varying the surface energy of one of the substrate surface and the mounting surface. The process according to the present invention can form a patterned film with lateral features smaller than 10 $\mu$m, particularly smaller than 1 $\mu$m, more particularly smaller than 100 nm. The resolution of the pattern depends on the magnitude of the temperature gradient, the thickness of the film, the surface tension of the film material, the difference of the velocity of sound of the film material and the substrate, the thermal conductivities of the film material and the adjacent medium and the difference in density between the film material and the adjacent medium such as for example air. For example, the velocity of sound (at an acoustic wavelength of approximately 1 $\mu$m) of polystyrene is 1250 m/s, of polymethylmethacrylate 2150 m/s and of silicon used as substrate 8400 m/s, respectively; the thermal conductivity of polystyrene is 0.16 W/mK, of polymethylmethacrylate 0.20 W/mK and of air 0.034 W/mK; the density of polystyrene is 0.987 g/m$^3$, of polymethylmethacrylate 1.116 g/m$^3$ and of silicon used as substrate is 2.33 g/m$^3$; and the surface tension of polystyrene is 0.03 N/m.

If desired, the pattern on the film can be transferred to another substrate using conventionally known etching techniques, e.g. reactive ion or chemical etching procedures. Alternatively, the patterned film itself can be used in subsequent applications, such as in a device, e.g. a diode, a transistor, a display device, or a chemical, biological, medical or mechanical sensor or part thereof.

According to the present invention, there is further provided an apparatus for producing a patterned film, the apparatus comprising a substrate having a substrate surface for supporting the film to be patterned; a temperature gradient generator for generating a temperature gradient in a temperature gradient volume, the temperature gradient having a component orientated along a normal direction of the substrate surface, wherein the temperature gradient volume includes at least a volume portion extending from at least an area of the substrate surface in the normal direction thereof.

In a preferred embodiment, the temperature gradient generator comprises at least first and second temperature control means, the temperature control means being spaced apart from each other, so that the substrate is operationally disposed at least partly therebetween and the temperature gradient volume is defined at least partly therebetween. In a more preferred embodiment, a mounting surface is provided opposite to the substrate surface, the first temperature control means being connected to the substrate, while the second temperature control means being connected to the mounting surface. The spacing between the substrate surface and the mounting surface can preferably be within the range of 10 nm to 5000 nm, more preferably 50 nm to 1000 nm, even more preferably 150 nm to 600 nm.

The temperature control means can be controlled to generate a temperature gradient between the substrate surface and the mounting surface opposite to the substrate surface within the range of $10^6$ °C/m to $10^{10}$ °C/m, more preferably $10^7$ °C/m to $10^9$ °C/m. There are no limitations concerning the geometrical design of the mounting surface. Preferably, the mounting surface provided opposite to the substrate surface can be, for example, designed in form of a plate (top plate).

The temperature gradient generator can be adapted to generate at least partly homogenous and/or at least partly heterogeneous temperature gradients, in particular temperature gradients varying laterally over the substrate surface.

In another embodiment according to the present invention, at least one of the substrate surface and/or the mounting surface is patterned with topographic features and/or has a spatially varying surface energy and/or a spatially varying thermal conductivity.

The film to be patterned and the mounting surface provided opposite thereto can be separated by e.g. an air gap, i.e. the spacing between the substrate surface and the mounting surface can be filled with e.g. air. Alternatively, the film and the mounting surface can be separated by any gaseous, liquid or solid material. For example, a double layer system of two solid materials can be used, one of the layers acting as the film to be patterned while the upper one superposed thereon serving as adjacent medium. When heated, both of the layers become liquid, while both of the layers, in turn, become solid, when cooled down. As a result, a structure or pattern, respectively, of one material in the other material is obtained. To increase the phonon reflection as explained later hereinbelow, it can be appropriate to provide thin gold layers having a thickness in the range of e.g. 1 nm to 100 nm on both surfaces (interfaces) of the first layer acting as the film to be patterned, so that the phonons propagating in the first layer of the double layer system of two solid materials are reflected much better at the first layer/second layer interface. The gold layers can be deposited onto the substrate surface and then on the film surface in that order. Alternatively, at first, the first layer of the double layer system acting as the film to be patterned can be sandwiched between both gold layers and this assembly can then be applied on the substrate surface, before applying the second layer of the double layer system on the upper gold layer of said assembly. In turn, the second layer of the double layer system can be applied on said assembly, before applying said assembly on the substrate surface. Such a process using a double layer system is of interest for applications like the semiconductor industry, photo-voltaic applications or for the preparation of photodiodes. After said procedure, one of the two solid material can also be removed by e.g. etching or dissolving to obtain a lithographic mask.

The separation distance, i.e. the spacing, can be varied while applying the temperature gradient. As mentioned above, the temperature gradient can be obtained by setting the substrate surface and the mounting surface at two different temperatures controlled by the first and second temperature means. The temperatures control means can be, for example, temperature baths, heating devices or cooling devices or other conventional temperature devices known in the art. Alternatively, at least one of the substrate surface and/or the mounting surface can be exposed of radiation from a radiation source, i.e. radiation from a radiation source heats the back side of at least one of the substrate surface and/or the mounting surface. The radiation source can be, for example, a laser, an infrared lamp, or any other intensive radiation source. The radiation source can be operated in a constant mode, i.e. the radiation source is switched on for a longer time period of the patterning process, so that a thermal equilibrium, i.e. a contant temperature gradient, is reached. Otherwise, the radiation source can be operated in a pulsed mode, so that a temperature gradient is set up only for a short time to reach, for example, a temperature difference between the substrate surface and the mounting surface, of 1000°C or more, thereby immediately destabilizing the film to be patterned. The latter procedure is particularly advantageous when using film materials having a high melting point such as, for example, metals and alloys.

The apparatus according to the present invention can be heated or cooled during operation.

The figures show:

Fig. 1 shows a schematical drawing of a preferred embodiment of the apparatus for producing the patterned films according to the present invention;

Figs 2a-c schematically show a columnar structure having well-defined column diameters and inter-column spacings as developed in accordance with the process of the present invention;

Figs 3a-c schematically show a columnar structure as developed in accordance with the process of the present invention, thereby using a top plate which is topographically patterned;

Figs 4a-c schematically show a columnar structure as developed in accordance with the process of the present invention, thereby using a substrate which has a lateral variation in its surface energy;

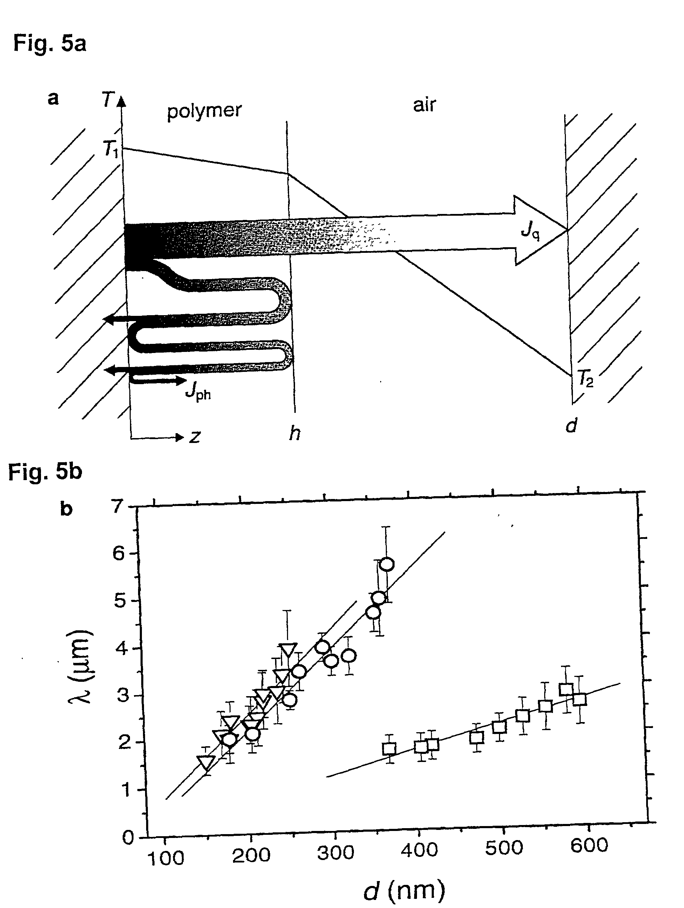

Fig. 5a shows a schematic representation of the theoretical model underlying the process according to the present invention, with $J_q$ representing a heat flux and $J_{ph}$ representing a phonon flux; Fig. 5b is a graph showing the experimentally determined instability wavelength $\lambda$ compared to the theoretical predictions, wherein the triangles and circles correspond to polystyrene films with $h$ = 80 nm, $\Delta T$ = 43 °C and $h$ = 100 nm, $\Delta T$ = 46 °C, respectively, while the squares represent a 92 nm thick polystyrene film which was spin-coated onto a gold (100 nm) covered silicon substrate ($\Delta T$ = 37 °C), the solid lines being theoretical predictions;

Figs. 6a-6c show optical micrographs of polystyrene (PS) films obtained after exposition to a temperature gradient, when applying a homogeneous field as carried out in the examples hereinbelow; and

Figs. 7a-7c show optical micrographs of polystyrene (PS) films obtained after exposition to a temperature gradient, when applying a heterogeneous field as carried out in the examples hereinbelow.

Other features and advantages of the invention will be apparent from the following.

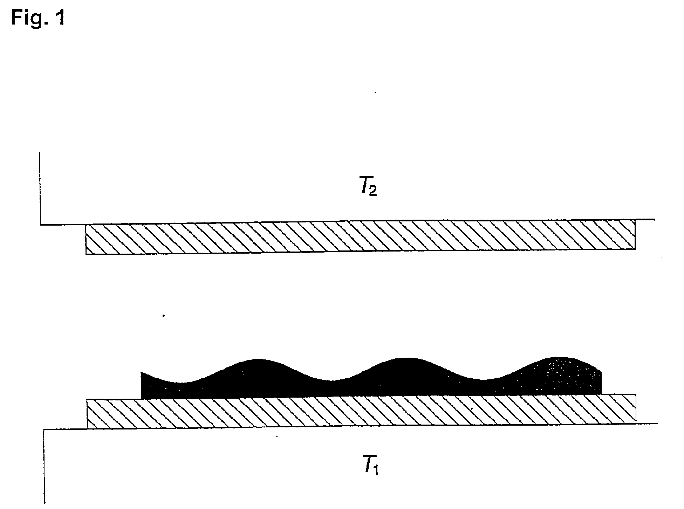

A preferred embodiment of the apparatus for producing the patterned films according to the present invention is shown in Fig. 1a. A film is formed on a substrate, opposed by a mounting surface in form of a plate (top plate). In this specific embodiment, the film is a polymer film, but, alternatively, the film can be any liquid or solid material. The substrate and the mounting surface are brought into thermal contact with first and second temperature control means which during operation produce a temperature gradient between the substrate surface and the mounting surface designed in form of a top plate. A particular medium is present between the film and the mounting surface, which has a thermal conductivity, density or velocity of sound that is different from the film material. For example, this medium can be vacuum, air, or any other liquid or solid material. As explained below in greater detail, the temperature gradient causes the film to form a pattern. Preferably, the film can contain an organic polymer or an organic oligomer. For example, the film can contain a glassy polymer (e.g. polystyrene), which has been spin-coated onto the substrate. Preferably, the film is liquefied before and/or during subjecting to the temperature gradient. For example, when the film is a glassy or semi-crystalline polymer, it may be solid at room temperature and turn liquid upon heating.

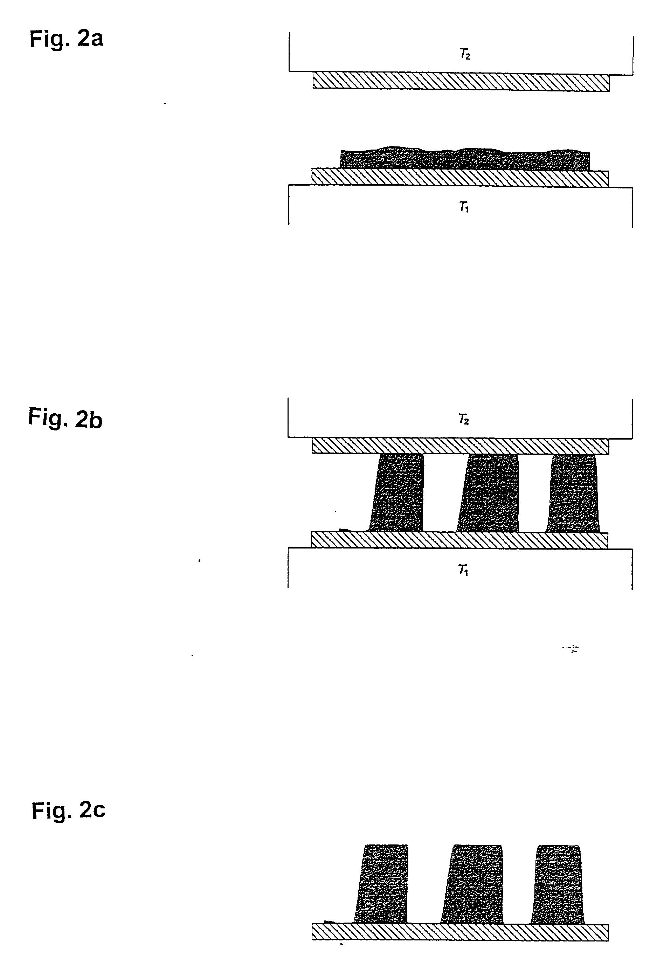

When two different temperatures are applied to the substrate surface and the mounting surface, the resulting temperature gradient between the substrate surface and the mounting surface will induce a thermomechanical pressure at the interface between the film and the spacing between the substrate surface and the mounting surface, which will ultimately destabilize the film and dominate over competing forces. The film develops a surface undulation with a well-defined wavelength as shown in Fig. 2a. With time, the amplitudes of these waves increase until the film touches the mounting surface (top plate) as shown in Fig. 2b, thereby producing a columnar structure having well-defined column diameters and inter-column spacings. By solidifying the film material, e.g. by cooling, the structure is preserved as shown in Fig. 2c. The column diameters and spacings, respectively, depend on parameters like the temperature difference, the thickness of the film, the thermal conductivities of the film material and the adjacent medium, the densities of the film material and the adjacent medium, and the velocity of sound of the film material and the substrate material.

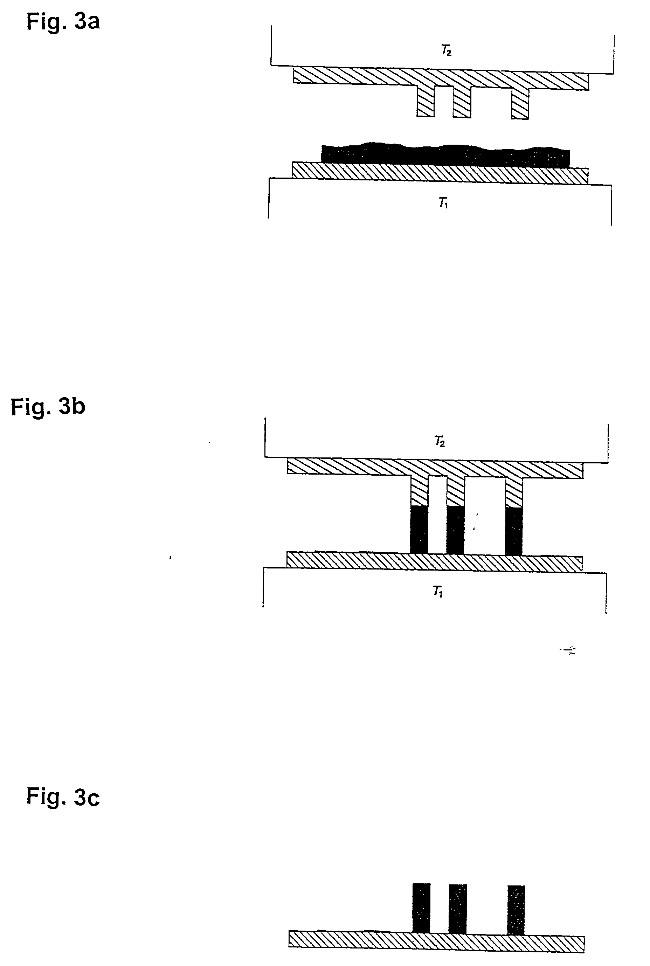

The embodiment described in Figs. 2a-2c corresponds to a laterally homogeneous externally applied temperature difference. In a laterally heterogeneous temperature field, the thermomechanically induced instability of the film is additionally modified by the lateral temperature gradients. This effect can be used to replicate a master pattern to a lateral structure in the film. To this end, the substrate surface, the mounting surface or both can feature a lateral pattern, i.e. the substrate surface can also be patterned, either in the alternative, or in addition, to the mounting surface. Such patterns can be produced, for example, by electron beam etching. Such an embodiment is shown in Fig. 3a, wherein the mounting surface is replaced with a top plate which is topographically patterned. In this case, the externally applied temperature difference causes the film undulations to focus in the direction of the strongest temperature gradient. As a result, the film forms a pattern corresponding to the topographically patterned top plate, as shown in Fig. 3b. Upon solidifying the film, the structure in the film is retained, as shown in Fig. 3c. In addition, the aspect ratio of the patterned film can be significantly greater than that of the patterned plate. To increase the aspect ratio, the spacing between the mounting surface and the substrate surface can be increased, while the film is liquefied and the temperature difference is applied. If necessary, the applied temperatures can be varied during the relative displacement of the mounting surface and the substrate surface.

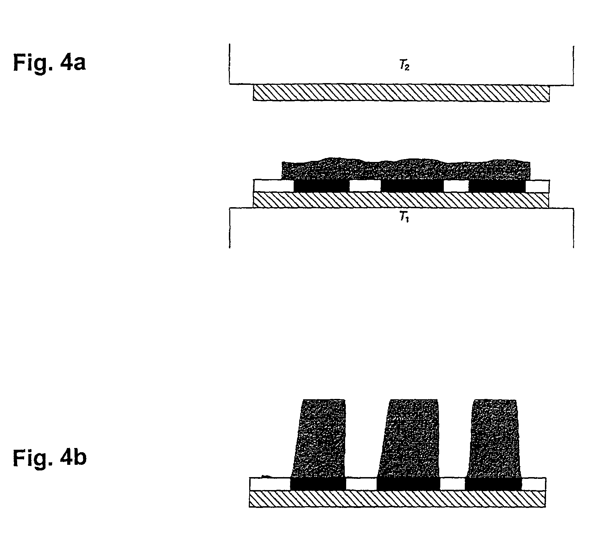

In a further embodiment as shown in Fig. 4a, the substrate is replaced with a substrate which has a lateral variation in its surface energy. The lateral variation in the surface energy can be produced, for example, by micro-contact printing. Thereafter, a film is deposited onto the substrate. As in the other embodiments, the film can be liquefied and a temperature difference is then applied to the substrate and the top plate. The temperature gradient results in an instability of the film as described above. The developing surface undulations align with respect to the surface energy pattern of the substrate. As shown in Fig. 4b, the structure in the film thus obtained is then preserved by solidifying the polymer.

Alternatively, in other embodiments, the mounting surface can have a lateral variation in surface energy, either in the alternative, or in addition, to the substrate surface. Further, the thermal conductivities of either the substrate surface and/or the mounting surface can spatially vary. Moreover, it is also possible to have a lateral variation in the surface energy of the substrate surface or the mounting surface or both, and a topographical pattern on the substrate surface or the mounting surface or both.

Although not meant to limit the invention in any way, theoretically, the origin of the film instability can be understood when considering the balance of forces which act at a polymer-air-interface (cf. Fig. 5a). The surface tension $\gamma$ minimizes the polymer-air- surface area and stabilizes the homogeneous polymer film. The temperature gradient causes a flux of thermal energy $J_q$ in the polymer film and the air gap. Associated with the flow $J_q$ is a flux of thermal excitations, so-called phonons ($J_{ph}$), towards lower temperatures as shown in Fig. 5a. Due to the different acoustic impedances of the two layers, the phonons propagating in the polymer film are nearly perfectly reflected at the liquid-air interface. The reflections of the phonons at the film surface gives rise to a radiation pressure. This radiation pressure is additionally amplified by multiple reflections at the film-air and film-substrate interfaces. The radiation pressure $p_r$ is opposed by the Laplace pressure which stems from the surface tension. A local perturbation in the film thickness $h$ results in a pressure gradient which drives a flow of the liquid in the plane of the film. The liquid flow next to a solid surface is given by a Poiseuille type formula, which, together with a mass conservation equation, establishes a differential equation describing the temporal response of the liquid. A common approach to investigate the effect of external forces on a liquid film is the linear stability analysis. A small sinusoidal perturbation is applied to an otherwise flat film and its response is calculated with the help of a linearized version of the differential equation. The resulting dispersion relation quantifies the decay or amplification of a given perturbation wavelength with time. The fastest amplified mode is given by:

$$\lambda_m = 2\sqrt{\frac{2\gamma}{\left(\frac{\partial p_r}{\partial h}\right)}} \qquad (1)$$

$\lambda_m$ is the wavelength of the mode and corresponds to the resolution of the formed pattern, $p_r$ is a function of the temperature gradient, the thermal conductivity of the polymer, and the velocities of sound of the polymer and the substrate. $h$ is the thickness of the film. The lines in Fig. 5b show $\lambda_m$ as a function of the spacing between the substrate and the top plate for three different parameter sets. The symbols are the results of experiments. A similar equation quantifies the characteristic time $\tau_m$ for the formation of the instability. The experimental data shown in Fig. 5b will be described further hereinbelow.

The expression for $\lambda_m$ can further be expressed as:

$$\frac{\lambda}{\lambda_0} = 2\pi \left[ \left( \frac{Ak_p}{u\left|\frac{\partial\gamma}{\partial T}\right|} - 1 \right) - \left( \frac{q}{q_0} \right) \right]^{-\frac{1}{2}} \left( \frac{q}{q_0} \right)^{-1} \tag{2}$$

with

$$\lambda_0 = \sqrt{\frac{\gamma}{\Delta T\left|\frac{\partial\gamma}{\partial T}\right|} \left( \frac{k_p}{k_0} - 1 \right) h} \tag{3}$$

and

$$q = \frac{k_0 k_p \Delta T}{k_0 h + k_p (d - h)} \tag{4}$$

$q_0$ is the value of $q$ for $d = 2(1 - k_0/k_p)h$, $k_0$ and $k_p$ are the thermal conductivities of air and polymer, respectively, $\Delta T$ is the temperature difference which is applied between the substrate surface and the mounting surface opposite to the substrate surface, $\gamma$ is the polymer-air surface tension, $\upsilon$ is the velocity of sound in the film, and $A$ is an amplification factor which stems from the multiple reflections of phonons between the polymer-air and polymer-substrate interfaces. The film thickness is $h$ and the spacing between the substrate surface and the mounting surface opposite of the substrate surface is $d$.

In general, the equation indicates that no features are formed without the presence of a temperature difference $\Delta T$. It also indicates that the resolution of the pattern is arbitrarily small because, in principle, $d$, $h$, and $\Delta T$ can be arbitrarily controlled. For example, heat isolating spacers can be used to precisely control the spacing $d$. Typically, the temperature gradient at least partly exceeds $10^6$ °C/m, more preferably $10^7$ °C/m. Preferably, the temperature gradient lies within the range of $10^6$ °C/m to $10^{10}$ °C/m, more preferably $10^7$ °C/m to $10^9$ °C/m.

While the topography of the film occurs spontaneously, control of the lateral structure is achieved by laterally varying the mounting surface by e.g. spatially varying the surface energy, by spatially varying the thermal conductivity of the mounting surface such as for example by patterning the top plate with topographic features, or by spatially varying the thermal conductivities of either the substrate surface and/or the mounting surface. In a preferred embodiment of the present invention, the mounting surface provided opposite to the substrate surface is designed as a (top) plate. In a more preferred embodiment, the top plate can be replaced by a topographically patterned master (cf. Fig. 3a-3c). Because the thermomechanical forces are strongest for smallest spacings $d$, the time for the instability to form is much shorter for smaller values of $d$. As a consequence, the emerging structure in the film is focused towards the mounting surface (top plate) structure. This leads to a replication of the master.

In general, the present invention exploits the use of thermomechanical forces to act on a boundary of different thermal conductivities. If the spacing between the substrate surface and the mounting surface provided opposite to the substrate surface is chosen small enough, particularly < 1 μm, small temperature differences $\Delta T$ in the range of 10 °C to 100 °C, particularly 20°C to 40°C, more particularly approximately 30 °C, are sufficient to generate high temperature gradients in the film. This results in strong pressures which act on the film surface ($\sim$10 kN/m$^2$). These forces cause the break-up of the film. For laterally homogeneous temperatures, the film instability features a characteristic wavelength which is a function of the temperature gradient and the difference in thermal conductivities of the film and the particular medium filling the spacing *d,* i.e. for example the air gap. It can be well described by a linear stability analysis. If the substrate surface or the mounting surface provided opposite to the substrate surface is replaced by a patterned master, the structure is replicated by the film.

As described in the experimental results below, the lateral length can scale down to 500 nm. Advantageously, by the present invention, the extension to lateral length scales of less than 100 nm and aspect ratios greater than 1 are achievable.

The present invention will now be illustrated by way of the following examples.

Homogeneous Fields

A thin polymer film of polystyrene (PS) having a thickness *h* was spin-coated from a solution onto a highly polished silicon wafer serving as a substrate. Subsequently, a mounting surface was provided opposite to the substrate by mounting another silicon wafer as an opposing top plate at a distance *d* (spacing *d*) leaving a thin air gap. This assembly was placed on a hot plate set at 170 °C and a cooled copper block whose temperature was maintained at 127 °C, was put on top of the assembly, establishing a temperature difference $\Delta T = 43$ °C. Both temperatures were above the glass transition temperature of the used polymer ($T_g$). To assure the air gap, the top plate had a small step. Using a wedge geometry, values of *d* ranging from 150 nm to 600 nm were achieved this way. The temperature difference $\Delta T$ and the geometry of the assembly determine the temperature gradient in the polymer film. The thermomechanical driving force scales with the temperature gradient. It increases with decreasing values of *d* and increasing polymer thicknesses *h.* The temperature difference combined with the small distance between the substrate and the top plate ($d < 1$ µm) leads to high temperature gradients ($\sim 10^8$ °C/m). After an annealing time of a few hours, the polymer is immobilized by quenching below $T_g$, the mounting surface is mechanically removed, and the morphology of the polymer film was investigated by optical and atomic force microscopy (AFM).

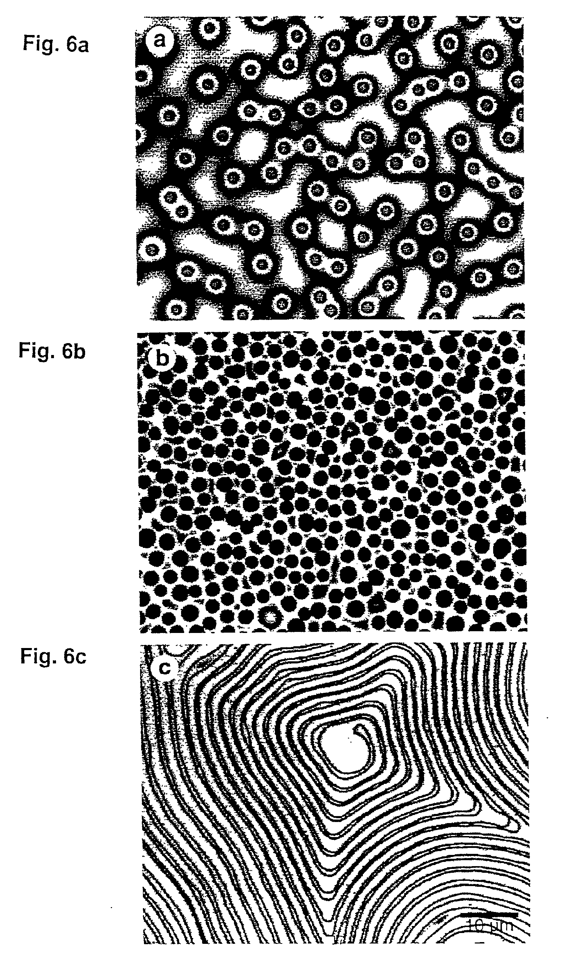

The results of the experiment are shown in Fig. 6a-6c, which are optical micrographs of polystyrene (PS) films that were exposed to a temperature gradient. In Figs. 6a and 6b, a 100 nm thick PS film was annealed for 18 h, during which the substrate and the mounting surface were kept at 170 °C and 124 °C, respectively, corresponding to $\Delta T = 46$ °C. In Fig. 6a the spacing *d* was = 345 nm, while in Fig. 6b the spacing was *d* = 285 nm. Figs. 6a and 6b correspond to the early and late stages of the instability, respectively. In addition to columnar structures, stripe like morphologies are also observed as shown in Fig. 6c, for a 110 nm thick PS film with a spacing of *d* = 170 nm and a temperature difference $\Delta T = 54$ °C.

The morphology in all three images exhibit well-defined lateral length scale. The wavelength $\lambda$ is a function of temperature gradient, which varies inversely with the - spacing d between the substrate surface and the mounting surface. The lateral structure dimensions as well as the plateau height is readily measured with the atomic force microscope yielding $\lambda$ as a function of the spacing *d.* The morphologies in Figs. 6 exhibit a stochastic distribution and no order. In Fig. 5b, $\lambda$ is plotted as a function of *d* for three polystyrene samples with *h* = 80 nm and $\Delta T = 43$ °C, *h* = 100 nm and $\Delta T = 46$ °C, and *h* = 92 nm and $\Delta T = 37$ °C for the triangles, circles, and squares, respectively. The lines correspond to the predictions of Eq. (2), with no adjustable parameters. For the samples which are represented by the squares, the silicon wafer used as substrate was coated with a 200 nm thick gold film before the deposition of the polymer film. This increases the reflection of the phonons, and, thus, the overall phonon pressure at the film-air surface gives rise to a higher amplification factor *A* in Eq. (2) and, in turn, to lower values of $\lambda$ compared to the circles and triangles. For a given film thickness *h*, the characteristic lateral structure size exhibits a power-law dependence as a function of a decreasing spacing *d.*

Heterogeneous Fields

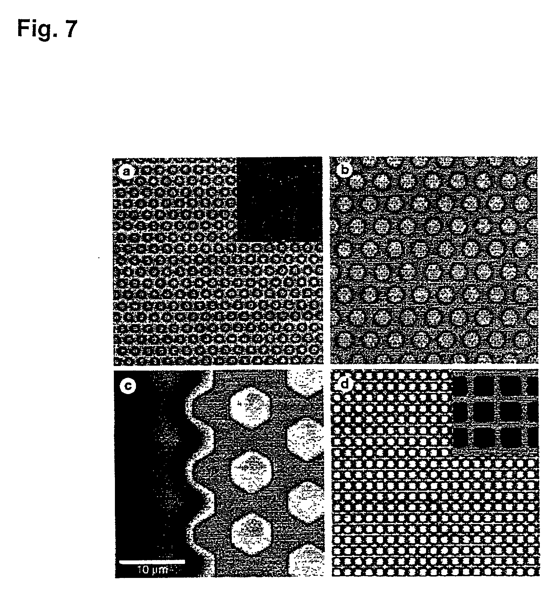

Patterned mounting surfaces in form of patterned top plates were mounted facing a polystyrene film (*h* = 106 nm). Then, the film was exposed to a temperature difference of $\Delta T = 37$ °C, followed by an annealing time of 20 h. To ensure that no polymer remains on the master after disassembly, the top plate can be rendered nonpolar by e.g. depositing a self-assembled alkane monolayer. Fig. 7a-c show optical microscopy images that show arrays of hexagons with periodicities of 2 mm (Fig. 7a), 4 mm (Fig. 7b), and 10 mm (Fig. 7c), which replicate the silicon master patterns. The spacing *d* was 160 nm in Fig. 7a, 214 nm in Fig. 7b, 220 nm in Fig. 7c and 155 nm in Fig. 7d, respectively. The inset in Fig. 7a shows a higher magnification atomic force microscopy image of Fig. 7a. In Fig. 7d, the top plate was heated to a higher temperature (T = 189 °C) than the substrate (T = 171 °C), which was covered by a 65 nm thick polystyrene film. The cross-hatched pattern consists of 500 nm wide and 155 nm high lines. The inset is a higher magnification atomic force microscopy image. The high quality of the replication extended over the entire 100 x 100 mm$^2$ area that was covered by the master pattern for all 4 images.

**Claims**

1. A method of producing a patterned film comprising the steps of

    (a) providing a substrate having a substrate surface for supporting the film to be patterned,
    (b) depositing at least one film containing a thermally conducting material onto the film supporting surface, and
    (c) exposing said at least one film to a temperature gradient, thereby generating forces in the film which cause a mass transfer in the film to thereby produce a pattern in the film.

2. The method according to claim 1, wherein the temperature gradient is within the range of $10^6$ °C/m to $10^{10}$ °C/m.

3. The method according to claim 1 or 2, further comprising the step of liquefying the film before and/or during exposition to a temperature gradient in step (c).

4. The method according to anyone of claims 1 to 3, further comprising the step of solidifying the film after step (c).

5. The method according to anyone of claims 1 to 4, wherein the film thickness is within the range of 10 nm to 1000 nm, more preferably 50 nm to 250 nm.

6. The method according to anyone of claims 1 to 5, wherein the temperature gradient is generated by bringing the substrate surface and a mounting surface provided opposite to the substrate surface into thermal contact with first and second temperature control means set at different temperatures.

7. The method according to anyone of claims 1 to 6, wherein the spacing between the substrate surface and the mounting surface is within the range of 10 nm to 5000 nm, more preferably 50 nm to 1000 nm.

8. The method according to anyone of claims 1 to 7, wherein the film contains an organic polymer or an organic oligomer.

9. The method according to anyone of claims 1 to 8, wherein the film to be patterned is of a single layer or includes a plurality of layers.

10. The method according to anyone of claims 1 to 9, wherein the temperature gradient is spatially controlled.

11. The method according to anyone of claims 1 to 10, wherein the surface energy of one of the substrate surface and the mounting surface is spatially controlled.

12. An apparatus for producing a patterned film, the apparatus comprising a substrate having a substrate surface for supporting the film to be patterned; a temperature gradient generator for generating a temperature gradient in a temperature gradient volume, the temperature gradient having a component orientated along a normal direction of the substrate surface,
    wherein the temperature gradient volume includes at least a volume portion extending from at least an area of the substrate surface in the normal direction thereof.

13. The apparatus according to claim 12, wherein the temperature gradient generator comprises at least first and second temperature control means, the temperature control means being spaced apart from each other, so that the substrate is operationally disposed at least partly therebetween and the temperature gradient volume is defined at least partly therebetween.

14. The apparatus according to claim 12 or 13, wherein a mounting surface is provided opposite to the substrate surface, the first temperature control means being connected to the substrate, while the second temperature control means being connected to the mounting surface.

15. The apparatus according to claim 14, wherein the spacing between the substrate surface and the mounting surface is within the range of 10 nm to 5000 nm, more preferably 50 nm to 1000 nm.

16. The apparatus according to anyone of claims 12 to 15, wherein the first and second temperature control means are controlled to generate a temperature gradient between the substrate surface and the mounting surface provided opposite to the substrate surface within the range of $10^6$ °C/m to $10^{10}$ °C/m.

17. The apparatus according to anyone of claims 12 to 16, wherein the temperature gradient generator is adapted to generate at least partly homogenous and/or at least partly heterogeneous temperature gradients.

18. The apparatus according to anyone of claims 12 to 17, wherein at least one of the substrate surface and the mounting surface is patterned with topographic features and/or has a spatially varying surface energy and/or a spatially varying thermal conductivity.

19. The apparatus according to anyone of claims 12 to 18, wherein the substrate is a semiconductor wafer, in particular a silicon wafer.

Fig. 1

$T_2$

$T_1$

**Fig. 2a**

$T_2$

$T_1$

**Fig. 2b**

$T_2$

$T_1$

**Fig. 2c**

Fig. 3a

$T_2$

$T_1$

Fig. 3b

$T_2$

$T_1$

Fig. 3c

Fig. 4a

$T_2$

$T_1$

Fig. 4b

## Fig. 5a

## Fig. 5b

Fig. 6a

Fig. 6b

Fig. 6c

# Fig. 7

European Patent Office

## EUROPEAN SEARCH REPORT

Application Number

EP 00 12 4205

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 014, no. 361 (M-1006), 6 August 1990 (1990-08-06) & JP 02 128890 A (DAINIPPON PRINTING CO LTD), 17 May 1990 (1990-05-17) * abstract * | 1-5,9-11 | B41M5/36 B41C1/10 B41M5/26 G05D23/19 |
| X | EP 0 487 794 A (SONY CORPORATION) 3 June 1992 (1992-06-03) * page 3, line 2 - line 56; figure 1 * * claims 1,3,21-24 * | 1-5,8-11 | |
| X | CHEMICAL ABSTRACTS, vol. 85, no. 4, 26 July 1976 (1976-07-26) Columbus, Ohio, US; abstract no. 27333c, T.SHIGEO ET AL.: ""Thermographic recording sheet based on poly(carbon fluoride) and zeolite"" page 403; XP002165823 * abstract * & JP 50 136038 A (CANON K.K.) 28 October 1975 (1975-10-28) * the whole document * | 1-5,8-11 | |
| X | US 5 135 048 A (R.BEHRLE ET AL.) 4 August 1992 (1992-08-04) * column 1, line 26 - line 39 * * column 2, line 48 - line 64 * * column 3, line 61 - column 4, line 25 * * claims 1,7-9; figure 2 * | 12-19 | TECHNICAL FIELDS SEARCHED (Int.Cl.7) B41M B41C G03F H05K B29D C08J G05D |

-/--

The present search report has been drawn up for all claims

| Place of search | Date of completion of the search | Examiner |
|---|---|---|
| THE HAGUE | 13 September 2001 | Bacon, A |

EPO FORM 1503 03.82 (P04C01)

# EP 1 207 048 A1

European Patent
Office

**Application Number**

EP 00 12 4205

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

18

**European Patent Office**

## EUROPEAN SEARCH REPORT

Application Number

EP 00 12 4205

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | D.HANSEN ET AL.: "Method for studying polymer crystallization in a temperature-gradient field with controlled crystal growth" JOURNAL OF POLYMER SCIENCE, POLYMER PHYSICS EDITION., vol. 10, no. 8, August 1972 (1972-08), pages 1615-1619, XP002177376 JOHN WILEY AND SONS. NEW YORK., US ISSN: 0887-6266 * page 1615, line 1 - line 26 * * page 1619, line 6 - line 25 * * figure 1 * | 12-19 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 September 2001 | Bacon, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**LACK OF UNITY OF INVENTION
SHEET B**

Application Number

EP 00 12 4205

The Search Division considers that the present European patent application does not comply with the requirements of unity of invention and relates to several inventions or groups of inventions, namely:

1. Claims: 1-11

    Method of producing a patterned film comprising the steps of (a) providing a substrate, (b) depositing a layer of thermally conducting material onto the substrate, (c) imagewise exposing the coated substrate to a temperature gradient.

2. Claims: 12-19

    Apparatus suitable for producing a patterned film, said apparatus comprising (a) a substrate and (b) a temperature gradient generator.

**EP 1 207 048 A1**

**ANNEX TO THE EUROPEAN SEARCH REPORT
ON EUROPEAN PATENT APPLICATION NO.**    EP 00 12 4205

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2001

| Patent document cited in search report | | Publication date | Patent family member(s) | | Publication date |
|---|---|---|---|---|---|
| JP 02128890 | A | 17-05-1990 | NONE | | |
| EP 487794 | A | 03-06-1992 | EP | 0487794 A1 | 03-06-1992 |
| JP 50136038 | A | 28-10-1975 | NONE | | |
| US 5135048 | A | 04-08-1992 | DE | 3726809 C1 | 15-12-1988 |
| | | | CH | 676055 A5 | 30-11-1990 |
| | | | FR | 2619459 A1 | 17-02-1989 |
| | | | JP | 1056398 A | 03-03-1989 |